Europäisches Patentamt

**European Patent Office**

**Office européen des brevets**

(11) Numéro de publication : **0 148 053**
**B1**

# FASCICULE DE BREVET EUROPÉEN

(45) Date de publication du fascicule du brevet :
**23.12.87**

(21) Numéro de dépôt : **84402456.2**

(22) Date de dépôt : **30.11.84**

(51) Int. Cl.⁴ : **G 02 B 23/12**, G 02 B  5/04,
G 02 B 27/12, G 02 B 23/04

(54) **Dispositif d'observation bioculaire.**

(30) Priorité : **05.12.83 FR 8319402**

(43) Date de publication de la demande :
**10.07.85 Bulletin 85/28**

(45) Mention de la délivrance du brevet :
**23.12.87 Bulletin 87/52**

(84) Etats contractants désignés :
**AT BE CH DE FR GB IT LI LU NL SE**

(56) Documents cités :
**EP-A- 0 033 946**
**DE-C-  858 736**
**GB-A- 1 249 302**
**US-A- 3 922 524**

(73) Titulaire : **SOCIETE D'OPTIQUE, PRECISION ELEC-
TRONIQUE ET MECANIQUE - SOPELEM
102 rue Chaptal
F-92300 Levallois-Perret (FR)**

(72) Inventeur : **Baluteau, Jean-Michel
77 allée de Chartres
F-93190 Livry-Gargan (FR)**

(74) Mandataire : **Phélip, Bruno et al
c/o Cabinet Harlé & Phélip 21, rue de la Rochefoucauld
F-75009 Paris (FR)**

Jouve, 18, rue St-Denis, 75001 Paris, France

**Description**

La présente invention se rapporte à un dispositif d'observation comportant un cube convertisseur d'image dont l'image de sortie est examinée par l'intermédiaire d'un bioculaire. Ce dispositif, adapté à la vision nocturne, peut notamment être appliqué à la réalisation d'un épiscope présentant une voie pour la vision nocturne et de préférence une autre voie pour la vision diurne et permettant la conduite d'un véhicule.

On connaît des dispositifs d'observation pour la vision nocturne qui comportent un objectif formant une image sur l'entrée d'un tube à intensification de luminance dont l'écran est observé par l'intermédiaire d'un oculaire (EP-A-00 033 946).

Dans des applications telles que la conduite de véhicules, la tête de l'observateur a tendance à bouger derrière le ou les oculaires ce qui entraîne des difficultés à l'observation. Pour faciliter l'utilisation et la conduite, on préfère les dispositifs d'observation présentant un bioculaire.

On a cherché à réaliser des dispositifs d'observation comportant un bioculaire (US-A-3 922 524). Mais jusqu'à présent, ces dispositifs ne sont pas pleinement satisfaisants tant il est difficile d'obtenir un grand champ apparent avec un tube de dimensions acceptables.

La présente invention telle qu'elle est caractérisée par les revendications fournit un dispositif d'observation binoculaire avec un seul tube convertisseur d'image dont l'image de sortie est examinée par un système bioculaire restituant un champ apparent important avec un tube standard de dimensions acceptables. Ce dispositif permet de réduire sensiblement l'encombrement en avant du bioculaire et convient pour réaliser un épiscope de conduite approprié à la vision nocturne.

Le dispositif selon l'invention est caractérisé par le fait qu'il comporte un véhicule qui donne de l'image de sortie du tube une image intermédiaire plane et agrandie située sensiblement dans le plan focal objet du bioculaire et un élément déviateur en matériau transparent limité d'un côté par une face sphérique ou plane et de l'autre côté par une face réticulée située sensiblement dans le plan de l'image intermédiaire et formée d'une pluralité de microfacettes planes inclinées sur l'axe optique de manière à former des microprismes de réfraction.

Selon une caractéristique, les microfacettes constituent des dièdres alternativement saillants et rentrants et égaux dont les arêtes sont contenues dans deux plans parallèles voisins.

Selon une autre caractéristique les arêtes des dièdres sont verticales.

Selon une autre caractéristique, l'élément déviateur est disposé de manière que la face réticulée constitue la face arrière.

Selon une autre caractéristique, une lentille de champ est collée air la face avant de l'élément déviateur dont les microfacettes sont inclinées du même angle par rapport à l'axe optique.

Selon une autre caractéristique, la lentille de champ est plan convexe, la face plane disposée à l'arrière étant collée à la face plane avant de l'élément déviateur.

Selon une autre caractéristique, le dispositif comporte un jeu de réflecteurs coudant l'axe optique.

L'invention va maintenant être décrite avec plus de détails en se référant à des modes de réalisation donnés à titre d'exemples et représentés par les dessins annexés sur lesquels :

La figure 1 représente un schéma développé du dispositif selon l'invention.

La figure 2 est une vue de détail de la figure 1.

La figure 3 représente un mode de réalisation du type épiscope de conduite.

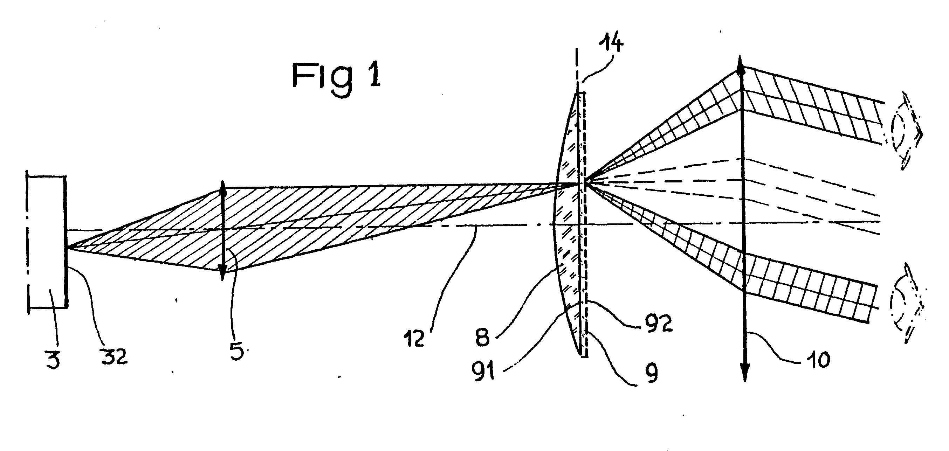

En se référant aux figures 1 à 3, le dispositif comporte de l'avant vers l'arrière (en se référant au sens de propagation de la lumière) et le long de l'axe optique 11-12, un objectif 1, un tube convertisseur d'image 3 (à intensification de luminance ou à infrarouge), un véhicule 5, un élément déviateur 9 auquel est collé de préférence vers l'avant, une lentille de champ 8 et un bioculaire 10 derrière lequel l'observateur place ses yeux. L'objectif forme une image sur la photocathode 31 du tube 3 qui fournit une image sur son écran de sortie 32. Le véhicule 5 centré sur l'axe 12 peut être composé d'un demi-véhicule avant 51 et d'un demi-véhicule arrière 52. Il transporte l'image formée sur l'écran de sortie 32 du tube pour en former une image intermédiaire plane et agrandie située dans le plan repéré 14.

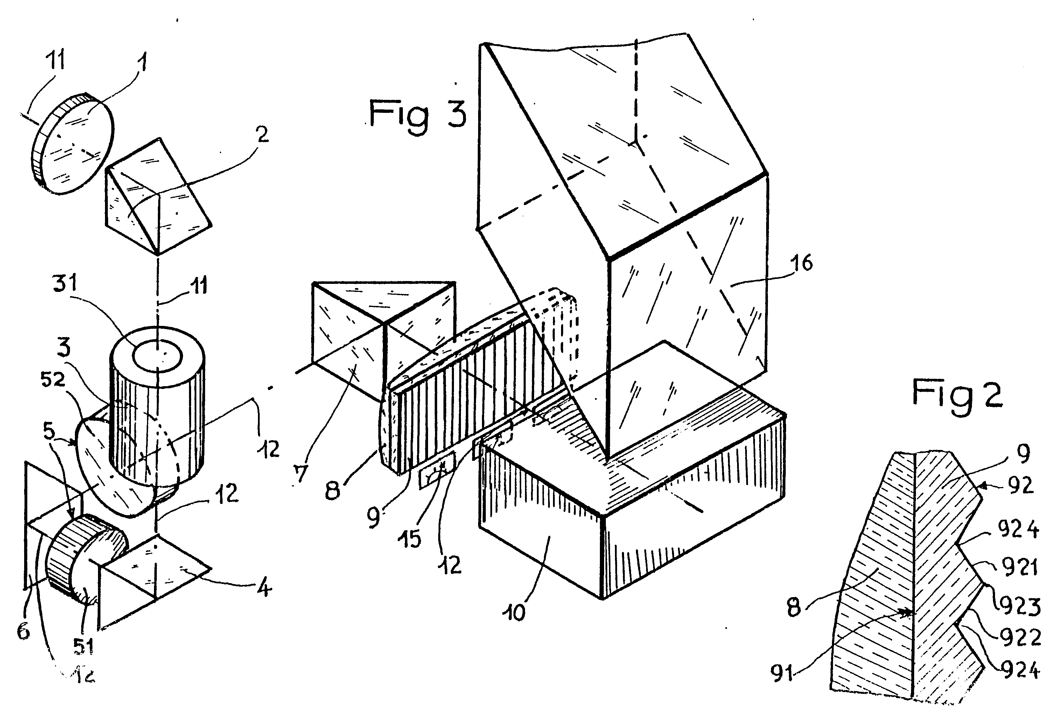

Si le véhicule 5 est réalisé pratiquement avec deux demi-véhicules 51 et 52 comme sur la figure 3, l'image sur l'écran de sortie du tube se trouve généralement au foyer antérieur ou objet du demi-véhicule 51, l'image intermédiaire repérée en 14 se trouvant alors au foyer postérieur ou image du demi-véhicule 52.

L'élément déviateur 9 disposé en arrière du véhicule 5 est formé par un matériau transparent limité par une face 91 sphérique ou plane et par une face réticulée 92 formée par une pluralité de microfacettes planes 921 et 922 inclinées sur l'axe optique de manière à former entre elles des dièdres ou angles dièdres alternativement saillants et rentrants. Autrement dit, cette face réticulée forme une pluralité de microprismes qui agissent selon les lois connues de l'optique géométrique. Ces microfacettes 921 et 922 sont concourantes deux à deux et forment, des arêtes externes 923 relatives aux angles dièdres saillants et des arêtes internes 924 relatives aux angles dièdres rentrants. Les arêtes externes 923 sont situées dans un même plan fictif et de même les arêtes internes 924 sont situées dans un même plan fictif parallèle au précédent et perpendiculaire à l'axe optique. Les arêtes 923 et 924 sont verticales. Le plan de l'image intermédiaire 14 est situé entre les deux plans fictifs contenant les arêtes 923 et 924.

L'élément déviateur 9 est disposé de manière que sa face réticulée 92 constitue la face arrière.

Le bioculaire 10 est placé, en arrière de l'élément déviateur 9, de manière que son plan focal objet coïncide sensiblement avec le plan, repéré 14, de l'image intermédiaire donnée par le véhicule 3 qui passe entre les arêtes 923 et 924 de l'élément déviateur 9. La planéité de cette image intermédiaire est indispensable pour obtenir la netteté sur toute l'étendue du champ.

De préférence, en avant de l'élément déviateur 9 est disposée une lentille de champ convergente 8. De préférence cette lentille est une lentille plan-convexe dont la face convexe est orientée vers l'avant et dont la face plane est orientée vers l'arrière et est collée à la face avant 91 de l'élément déviateur 9 qui est plane.

En variante l'élément déviateur 9 pourrait présenter une face avant sphérique convexe de manière à assurer la fonction du verre de champ décrit précédemment.

Du fait de l'introduction de la lentille de champ à l'avant de l'élément déviateur pour rejeter la pupille à l'infini, les angles dièdres, saillants ou rentrants, sont tous égaux (rectilignes égaux) et les microfacettes sont toutes inclinées du même angle sur l'axe optique, les bissecteurs des dièdres étant tous parallèles à l'axe optique 12. Dans ce cas le pas entre deux arêtes externes successives 923 ou entre deux arêtes internes successives 924 est constant et de l'ordre de quelques centièmes de millimètres.

En variante, les microfacettes pourraient avoir des inclinaisons variables par rapport à l'axe optique.

L'élément déviateur 9 qu'il soit réalisé avec une face avant 91 plane ou sphérique est obtenu par moulage d'une matière plastique de qualité optique.

Le fonctionnement du dispositif est le suivant.

L'objectif 1 forme une image sur la photocathode du tube 3 qui fournit une image sur son écran de sortie. Cette image est transportée par le véhicule 5 en donnant une image plane et agrandie dans le plan focal 14 du bioculaire où est disposée la surface réticulée 92 de l'élément déviateur 9.

Chaque microprisme décale la pupille de sortie, par l'une de ses microfacettes, à 32 mm environ de l'axe optique 12 et décale cette même pupille de sortie, par l'autre microfacette, de façon symétrique c'est-à-dire à 32 mm environ de l'autre côté de l'axe optique. Ainsi au lieu d'une pupille de sortie centrée sur l'axe on obtient deux pupilles symétriques par rapport à l'axe optique et séparées par un intervalle de 64 mm environ qui constitue l'intervalle interpupillaire moyen. Le verre de champ 8 rejette à l'infini l'image du diaphragme réel placé dans le véhicule 5 ce qui permet de réaliser des microprismes élémentaires identiques.

Chaque œil ne reçoit qu'une moitié de l'image découpée en bandes parallèles. Ceci ne présente aucun inconvénient si les bandes sont étroites et leur largeur de l'ordre du plus petit détail perceptible par l'œil. La continuité sur l'image est alors assurée.

L'épiscope de conduite représenté par la figure 3 est conforme au schéma développé représenté par la figure 1. Les composants ayant les mêmes fonctions portent les mêmes références sur les deux figures.

Pour obtenir un encombrement réduit tout en logeant le véhicule, l'axe optique 11, 12 est coudé successivement par quatre réflecteurs 2, 4, 6, 7, de manière que l'axe du bioculaire 10 soit au-dessous et parallèle à l'axe de l'objectif 1 et soit décalé du plan vertical passant par cet axe de l'objectif. Ces réflecteurs sont des prismes à réflexion totale équivalents chacun à un miroir simple. Ils réalisent ensemble une combinaison de Porro de première espèce qui réalise un renversement de l'image et qui associée à l'objectif 1, au tube 3 à inversion d'image et au véhicule 5 restitue une image droite.

L'axe optique au niveau de l'objectif 1 étant horizontal le premier prisme 2 situé après ledit objectif coude l'axe optique vers le bas et verticalement. Le second prisme 4, disposé après le tube 3, coude l'axe optique 12 vers l'avant dans un plan horizontal. Le troisième prisme 6 coude l'axe optique dans le même plan horizontal de manière que l'axe soit transversal par rapport à l'axe du bioculaire. Le quatrième prisme 7 coude l'axe optique dans le plan horizontal ci-dessus de manière que l'axe du bioculaire soit parallèle à l'axe de l'objectif. En arrière du quatrième prisme 7 sont disposés la lentille de champ 8, l'élément déviateur 9 et le bioculaire 10.

Du fait que dans certaines applications on peut limiter le champ en hauteur on peut donner à l'élément déviateur 9 une forme rectangulaire. On peut alors utiliser l'espace disponible pour loger dans le plan focal du bioculaire des indicateurs ou des voyants repérés 15, relatifs à des appareils de mesure nécessaires par exemple à la conduite du véhicule.

L'épiscope pour vision de nuit qui a été décrit ci-dessus peut être associé, du fait du décalage latéral des axes optiques, à un épiscope 16 pour la vision de jour constitué par un prisme rhomboédrique disposé au-dessus du bioculaire. L'observateur peut facilement passer de la vision de jour à la vision de nuit.

A titre indicatif, on va donner ci-après les caractéristiques d'une lunette ou d'un épiscope de conduite à intensification de luminance dont le grossissement est voisin de 1 et dont le champ est de l'ordre de 90°. Le tube à intensification de luminance reçoit une image de 50 mm et fournit sur l'écran de sortie une image de 40 mm inversée. L'objectif a une focale de 25 mm avec une ouverture F/1,8. Le véhicule a un grandissement de 2,75 et il fournit une image de 110 mm. Le bioculaire a une focale de 55 mm. Les pupilles de sortie constituent deux plages sensiblement circulaires écartées de 64 mm et ayant chacune un diamètre de 13 mm environ. L'élément déviateur 9 est réalisé avec une résine synthétique d'indice n = 1,574. Le pas entre les arêtes est de 0,03 mm et les microfacettes sont inclinées de 34° par rapport à la face verticale 91.

## Revendications

1. Dispositif d'observation comportant un tube convertisseur d'image (3) et un véhicule (5) qui donne de l'image de sortie du tube (3) une image intermédiaire (14) plane et agrandie, caractérisé par le fait qu'il comporte un élément déviateur (9) en matériau transparent limité d'un côté par une face sphérique ou plane (91) et de l'autre côté par une face réticulée (92) située sensiblement dans le plan de ladite image intermédiaire (14) et formée par une pluralité de microfacettes planes (921, 922) inclinées sur l'axe optique (12) de manière à former entre elles une pluralité de microprismes de réfraction et un bioculaire (10) derrière lequel l'observateur place ses yeux et qui est disposé de manière que son plan focal objet soit situé sensiblement dans le plan de ladite image intermédiaire (14) et de ladite face réticulée (92).

2. Dispositif selon la revendication 1, caractérisé par le fait que les microfacettes (921, 922) constituent des dièdres alternativement saillants et rentrants et égaux dont les arêtes (923-924) sont contenues dans deux plans parallèles voisins.

3. Dispositif selon l'une quelconque des revendications précédentes, caractérisé par le fait que les arêtes (923, 924) sont verticales.

4. Dispositif selon l'une quelconque des revendications précédentes, caractérisé par le fait que l'élément déviateur (9) est disposé de manière que la face réticulée (92) constitue la face arrière.

5. Dispositif selon l'une quelconque des revendications précédentes, caractérisé par le fait qu'il comporte une lentille de champ (8) collée sur la face avant de l'élément déviateur (9) dont les microfacettes (921, 922) sont inclinées du même angle sur l'axe optique.

6. Dispositif selon l'une quelconque des revendications précédentes, caractérisé par le fait que la lentille de champ (8) est plan-convexe, la face plane, disposée à l'arrière, étant collée à la face avant (91) dudit élément déviateur (9) qui est plane.

7. Dispositif selon l'une quelconque des revendications précédentes, caractérisé par le fait que la face avant (91) de l'élément déviateur est une face sphérique convexe.

## Claims

1. Observation device comprising an image converter tube (3) and an optical system (5) which gives a plane and enlarged intermediate image (14) of the exit image of the tube (3), characterized in that it includes a deflecting element (9) of transparent material bounded on one side by a spherical or plane face (91) and on the other side by a reticulated face (92) situated substantially in the plane of the said intermediate image (14) and formed by a plurality of plane microfacets (921, 922) inclined in relation to the optical axis (12) in such a manner as to form between them a plurality of refractive microprisms and a biocular viewing device (10), behind which the observer places his eyes and which is disposed in such a manner that its object focal plane is situated substantially in the plane of the said intermediate image (14) and of the said reticulated face (92).

2. Device according to claim 1, characterized in that the microfacets (921, 922) constitute dihedrals which are alternately projecting and re-entrant and equal, the edges (923-924) of which are contained in two neighbouring parallel planes.

3. Device according to either one of the preceding claims, characterized in that the edges (923, 924) are vertical.

4. Device according to any one of the preceding claims, characterized in that the deflecting element (9) is disposed in such a manner that the reticulated face (92) constitutes the rear face.

5. Device according to any one of the preceding claims, characterized in that it includes a field lens (8) adhered to the front face of the deflecting element (9), the microfacets (921, 922) of which are inclined by the same angle in relation to the optical axis.

6. Device according to any one of the preceding claims, characterized in that the field lens (8) is planoconvex, the plane face, disposed at the rear, being adhered to the front face (91) of the said deflecting element (9), which is plane.

7. Device according to any one of the preceding claims, characterized in that the front face (91) of the deflecting element is a convex spherical face.

## Patentansprüche

1. Beobachtungsvorrichtung mit einer Bildwandlerröhre (3) und einem optischen System (5), das von dem aus der Röhre (3) austretenden Bild ein ebenes und vergrößertes Zwischenbild (14) abgibt, dadurch gekennzeichnet, daß sie ein Ablenkelement (9) aus transparentem Material aufweist, das auf einer Seite durch eine sphärische oder ebene Fläche (91) und auf der anderen Seite durch eine netzförmige Fläche (92) begrenzt ist, die im wesentlichen in der Ebene des besagten Zwischenbildes (14) liegt und die durch mehrere ebene Mikrofacetten (921, 922) gebildet ist, welche zur optischen Achse (12) derart geneigt sind, daß sie zwischen sich mehrere Refraktions-Mikroprismen bilden, und ein Biocular (10) aufweist, hinter dem sich die Augen des Beobachters befinden und das derart angeordnet ist, daß sich seine Objekt-Fokalebene im wesentlichen in der Ebene des besagten Bildes (14) und der besagten netzförmigen Fläche (92) befindet.

2. Vorrichtung nach Anspruch 1, dadurch gekennzeichnet, daß die Mikrofacetten (921, 922) aus abwechselnd vorspringenden und zurückgesetzten gleichen Diederflächen bestehen, deren Ecken (923, 924) in zwei parallelen benachbarten Ebenen enthalten sind.

3. Vorrichtung nach einem der vorhergehenden Ansprüche, dadurch gekennzeichnet, daß die Kanten (923, 924) vertikal sind.

4. Vorrichtung nach einem der vorhergehenden Ansprüche, dadurch gekennzeichnet, daß das Ablenkelement (9) derart angeordnet ist, daß die netzförmige Fläche (92) die hintere Fläche bildet.

5. Vorrichtung nach einem der vorhergehenden Ansprüche, dadurch gekennzeichnet, daß sie eine Feldlinse (8) enthält, die auf die Fläche vor dem Ablenkelement (9) geklebt ist, deren Mikrofacetten (921, 922) unter dem gleichen Winkel zur optischen Achse geneigt sind.

6. Vorrichtung nach einem der vorhergehenden Ansprüche, dadurch gekennzeichnet, daß die Feldlinse (8) plankonvex ist und die auf der Rückseite befindliche ebene Fläche auf der Vorderseite (91) des besagten ebenen Ablenkelementes (9) aufgeklebt ist.

7. Vorrichtung nach einem der vorhergehenden Ansprüche, dadurch gekennzeichnet, daß die Vorderseite (91) des Ablenkelementes eine sphärische konvexe Fläche ist.

Fig 1

Fig 2

Fig 3

2